# EUROPÄISCHE PATENTSCHRIFT

(11) **EP 1 575 445 B1**
(45) Veröffentlichungstag und Bekanntmachung des Hinweises auf die Patenterteilung: **31.12.2008**
(21) Anmeldenummer: 03810844.5
(22) Anmeldetag: 19.12.2003
(51) Int. Cl.: A61C 5/06, A61C 9/00, B05C 17/005

(54) **VORRICHTUNG ZUM AUSGEBEN EINER GEMISCHTEN MEHRKOMPONENTENMASSE**
DEVICE FOR DISPENSING A MIXED MULTI-COMPONENT COMPOUND
DISPOSITIF SERVANT A DISTRIBUER UN MELANGE DE PLUSIEURS COMPOSANTS

(30) Priorität: 19.12.2002 DE 20219752 U
(43) Veröffentlichungstag der Anmeldung: 21.09.2005
(73) Patentinhaber: Ernst Mühlbauer GmbH & Co.KG, 25870 Norderfriedrichskoog (DE)
(72) Erfinder: LEIN, Edgar, 22299 Hamburg (DE); HÖRTH, Hans, 21147 Hamburg (DE)
(74) Vertreter: Glawe, Delfs, Moll
(86) Internationale Anmeldenummer: PCT/EP2003/014614
(87) Internationale Veröffentlichungsnummer: WO 2004/056281

(56) Entgegenhaltungen:
- EP-A- 0 721 805
- DE-U- 29 820 831
- US-A- 3 767 085
- US-A- 5 881 921

## Beschreibung

Die Erfindung betrifft eine Vorrichtung zum Ausgeben einer gemischten Mehrkomponentenmasse, insbesondere für zahnärztliche Zwecke gemäß dem Oberbegriff von Anspruch 1.

Es sind zwar Vorrichtungen zum Ausgeben einer gemischten Mehrkomponentenmasse mit einer Kartusche mit mehreren, die Komponenten enthaltenen Behältern bekannt, auf die die Mischdüse direkt aufgesetzt wird (DE 197 08 548 A1,

DE 100 60 513 A1). Nähere Einzelheiten, wie das Auspressen erfolgen soll, sind diesen Schriften aber nicht zu entnehmen. Es ist zwar zu vermuten, dass eine Halterung vorgesehen ist; auch hierüber ist den Dokumenten nichts näheres zu entnehmen. Die Halterung ist auch nur von untergeordneter Bedeutuhg, so lange nur Flüssigkeiten geringer Viskosität verarbeitet werden sollen, da dann nur geringe Drücke auftreten.

Es ist weiter eine Mehrkomponentenkartusche mit einer auswechselbaren Innenverpackung bekannt, die ausdrücklich für Flüssigkeiten bestimmt ist (DE 694 15 310 T2). Die Kartusche besteht aus einer Kolben- Zylindereinheit, an der unter anderem ein in dem Dokument ausdrücklich so bezeichneter Kartuschenvorderteil 17 befestigt ist. Dieser Kartuschenvorderteil, an dem die Mischdüse befestigt wird, ist keine Halterung für die Kartusche und kann eine solche Halterung auch nicht ersetzen. Eine solche Halterung wird vermutlich nötig sein, wenn die Kartusche verwendet werden soll.

Zur Herstellung von Zahnabdrücken werden höher viskose Dentalmassen verwendet. Diese werden durch Mischen mehrerer Komponenten, insbesondere von zwei Komponenten, hergestellt, die in Mehrfachkartuschen, insbesondere Doppelkartuschen, gelagert werden. Für das Mischen und Ausbringen der Massen ist ein Mischer erforderlich. Weiter ist eine Vorrichtung erforderlich, welche für den Vorschub der Kolben in den Kartuschen zum Ausgeben der Massen sorgt. Die Auslaßöffnung des Mischers spendet dann das gemischte Material vorteilhaft auf einen Löffel, der zur Abdrucknahme dient.

Die Kartuschen werden zu diesem Zweck mit der Auslaßöffnung nach unten in das Ausbringgerät eingelegt. Um ein Abspringen des Mischers während des Betriebs zu vermeiden, wird die Mischdüse an der Kartusche arretiert. Hierzu kann der Mischer über einen an der Kartusche schwenkbar anzubringenden Bügel gehalten werden oder über einen Schieber an den Auslaßöffnungen der Kartusche gehalten werden (DE 298 20 832 U, DE 299 17 013 A). Eine Kartusche enthält Material für mehrere Anwendungen. Da das Material sofort nach dem Mischen auszuhärten beginnt, ist für jede Anwendung ein neuer Mischer zu verwenden. Dazu muß die Kartusche entweder aus dem Gerät entnommen werden, um den neuen Mischer zu befestigen, oder der Mischer muß mit der Kartusche im Gerät aufgesteckt werden, wobei sich dies umständlich gestaltet, da die Kartuschenöffnung durch ihre Kopfüberstellung schlecht einsehbar ist. Nachteilig ist auch, daß für jede Kartusche zusätzliche Wegwerfteile (Schieber) notwendig sind, was die Kosten erhöht und zusätzlichen Müll schafft.

Es ist *eine* tragbare *und von Hand* zu *betätigende Vorrichtung* zum *Ausgelben von gemischten Mehrkomponentenmassen bekannt, bei der die Mischdüse in Längsrichtung der Vorlleistung aufgesteckt und durch eine Überwurfmutter befestigt wird (*US 3, 767, 085*). Bei einer anderen Vorrichtung zum Ausgeben von Mehrkomponentenmassen ist die Mischdüse entweder fest an der Vorrichtung oder den Kartuschen angeordnet (*US 5, 881, 921*).*

Die Aufgabe besteht in der Schaffung einer Vorrichtung der eingangs genannten Art, bei der die Mischdüse auf einfachere Weise und schneller ausgewechselt werden kann.

*Die erfindungsgemäße Lösung besteht darin, dass die Halterung für die Mischdüse zum Einsetzen und Herausnehmen der Mischdüse quer zur Längsrichtung der Vorrichtung ausgebildet ist und über eine axiale Parallelführung mit der Halterung für die Kartusche verbunden und in Längsrichtung der Vorrichtung in eine im wesentlichen dichte Verbindung mit den Behältern und von dieser wieder weg bewegbar ist.*

Es ist also die Mischdüse nicht direkt mit der Kartusche verbunden. Beide werden vielmehr separat in der Vorrichtung untergebracht und gehalten. Mit der Halterung für die Mischdüse kann diese mit der Kartusche in Verbindung gebracht werden, was insbesondere bedeutet, daß eine im wesentlichen dichte Verbindung zwischen den Austrittskanälen der Komponenten aus den Behältern und den Eintrittsöffnungen der Mischdüse erreicht wird. Die Mischdüse wird durch diese Halterung an der Vorrichtung gehalten, an der auch die Kartusche bereits gehalten wird. Die Mischdüse kann dabei durch entsprechende Betätigung ihrer Halterung eingesetzt oder entfernt werden, ohne daß die Kartusche entfernt werden muß. Wegwerfteile in Form von Schiebern wie beim Stand der Technik sind nicht mehr erforderlich.

Obwohl dieses letzere Merkmal besonders vorteilhaft ist, gehören zur Erfindung auch solche Ausführüngsformen, bei denen die Mischdüse erst ausgewechselt werden kann, wenn vorher die Kartusche entfernt ist.

Die Mischdüse ist quer zur Längsachse der Vorrichtung einsetzbar und herausnehmbar. Die Auspreßkräfte wirken dabei in Längsrichtung, so daß die Mischdüse durch diese Kräfte nicht aus der Vorrichtung herausgedrückt werden kann.

Die Erfindung ist besonders vorteilhaft im Zusammenhang mit dynamischen Mischern anzuwenden. In diesem Falle ist zweckmäßigerweise vorgesehen, daß die erfindungsgemäße Vorrichtung einen mit der als dynamischer Mischer ausgebildeten Mischdüse verbihdbären Aritrieb aufweist.

Die Halterung für die Mischdüse ist in Längsrichtung der Vorrichtung bewegbar, also auf die Austrittskanäle und gegebenenfalls die Antriebswelle für den dynamischen Mischer hin bewegbar.

Der Antrieb des dynamischen Mischers und Auspressen der Komponenten kann dann mit derselben Vorrichtung erfolgen.

Zweckmäßigerweise weist die Vorrichtung einen Anschlag zur. Begrenzung der Querbewegung der Mischdüse auf. Diese wird dank in Querrichtung bis zum Anschlag eingeschoben. Die Bedienungsperson ist dann sicher, daß sich die Mischdüse nunmehr in der richtigen Stellung befindet, in der sie mit der Kartusche in Verbindung gebracht werden kann.

Die Mischdüse kann besonders schnell, einfach und zuverlässig an der Kartusche befestigt, bzw. von derselben gelöst werden, wenn die Halterung für die Mischdüse mit Hilfe eines Hebels verstellbar ist.

Die Mischdüse besitzt Einlaßöffnungen für die Komponenten, die winkelmäßig mit den Austrittskanälen der Komponenten aus den Behältern der Kartusche ausgerichtet werden müssen. Dies geschieht bei einer vorteilhaften Ausführungsform dadurch, daß die Halterung für die Mischdüse zwei Vorsprünge aufweist, auf die der Fußteil der Mischdüse mit darin diametral angeordneten Nuten aufschiebbar ist. Die Vorsprünge können dabei unterschiedliche Dicken und die Nuten entsprechende Breiten haben, damit der Mischer nicht um 180° axial verdreht, also nur in einer Position eingeschoben werden kann. Dies ist besonders vorteilhaft, wenn die Austrittskanäle und entsprechend die Einlaßöffnungen unterschiedliche Durchmesser haben.

Obwohl selbstverständlich Kartuschen und Mischdüsen von der eigentlichen Vorrichtung lösbare Teile sind, soll zur Erfindung auch eine Vorrichtung gehören, die eine Kartusche und eine Mischdüse aufweist.

In den Schutzumfang des Patents sollen auch Anordnungen aus Kartuschen und Mischdüsen fallen, die in eine erfindungsgemäße Vorrichtung einsetzbar sind.

Die Erfindung wird im folgenden anhand einer vorteilhaften Ausführungsform unter Bezugnahme auf die beigefügten Zeichnungen beschrieben. Es zeigen:
- Fig. 1: in perspektivischer Ansicht eine erfindungsgemäße Vorrichtung;
- Fig. 2: eine Detailansicht des in Figur 1 eingekreisten Teils der Halterung;
- Fig. 3: in perspektivischer Detailansicht eine erfindungsgemäße Vorrichtung mit eingesetzter, aber noch nicht fixierter Mischdüse;
- Fig. 4: die Anordnung der Fig. 1 bis 3 teilweise im Schnitt;
- Fig. 5: eine perspektivische Ansicht einer Mischdüse;
- Fig. 6: in perspektivischer Detailansicht die Vorrichtung mit eingesetzter und fixierter teilweise im Schnitt dargestellter Mischdüse; und
- Fig. 7: die Anordnung der Fig. 6 teilweise im Schnitt.

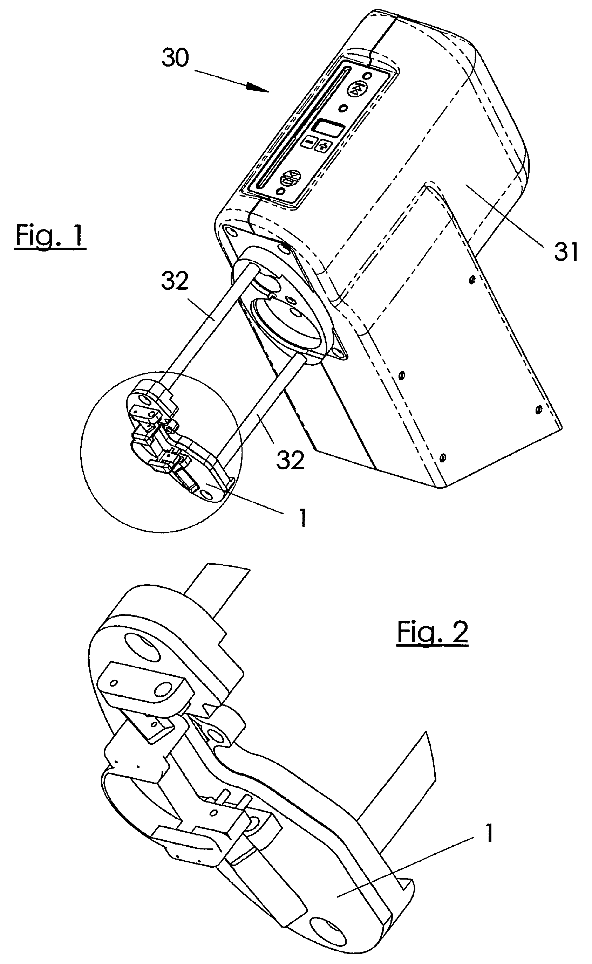

In Figur 1 ist eine erfindungsgemäße Vorrichtung 30 mit einem Haupt- und Antriebsteil 31, mit dem die Kolben angetrieben werden können, und einer Grundplatte 1 gezeigt. Die Grundplatte der Figur 1 ist in Figur 2 im vergrößerten Maßstab dargestellt. Die Kartuschen werden zwischen den Hauptteil 31 der Vorrichtung und der Grundplatte 1 eingespannt. Zu diesem Zweck wird die Grundplatte 1 durch Stangen 32 gehalten.

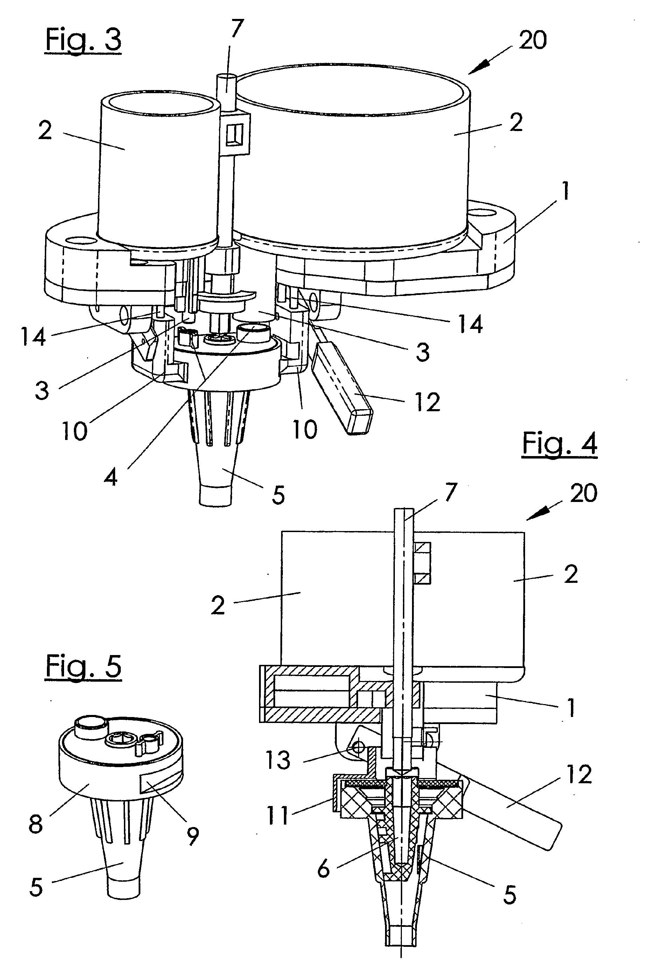

Die Fig. 3, 4, 6 und 7 zeigen eine Detailansicht der erfindungsgemäßen Vorrichtung. Auf einer Grundplatte 1 ist die Kartusche 20 mit ihren Behältern 2 aufgesetzt. Nur der untere Teil der Behälter 2 ist gezeigt, die man sich nach oben fortgesetzt denken muß. In den Behältern 2 ist jeweils ein Kolben (nicht gezeigt) angeordnet, der durch ebenfalls nicht gezeigte oberhalb der Behälter 2 angeordnete Einrichtungen niedergedrückt werden kann, damit die Komponenten durch Austrittsröhren 3 austreten und in Eintrittsöffnungen 4 einer Mischdüse 5 eintreten können, um dann aus dieser herausgedrückt zu werden. Die Mischdüse 5 weist dabei eine drehbar durch eine Welle 7 antreibbare Mischwalze 6 auf.

Die Mischdüse 5 ist, wie dies in Fig. 5 gezeigt ist, an zwei diametral entgegengesetzten Stellen ihres Fußteils 8 mit zueinander parallelen Nuten 9 versehen, von denen in Fig. 5 nur eine gezeigt ist. Mit diesen Nuten 9 wird die Mischdüse 5 auf zwei Schienen 10 der Vorrichtung geführt, wenn die Mischdüse 5 in die Vorrichtung eingeschoben wird. Diese Einschiebung in Querrichtung wird durch einen Anschlag 11 begrenzt. Die Schienen 10, die die Mischdüse 5 halten, sind nun mit Hilfe eines Hebels 12, der bei 13 an einem entsprechenden Vorsprung des Grundteils 1 gelagert ist, nach oben bewegbar. Zu diesem Zweck ist der Hebel 12 auch mit dem beweglichen Teil schwenkbar verbunden, der die Schienen 10 enthält. Diese Schienen wiederum sind durch Parallelführungen in Axialrichtung gehalten, die bei 14 angedeutet sind.

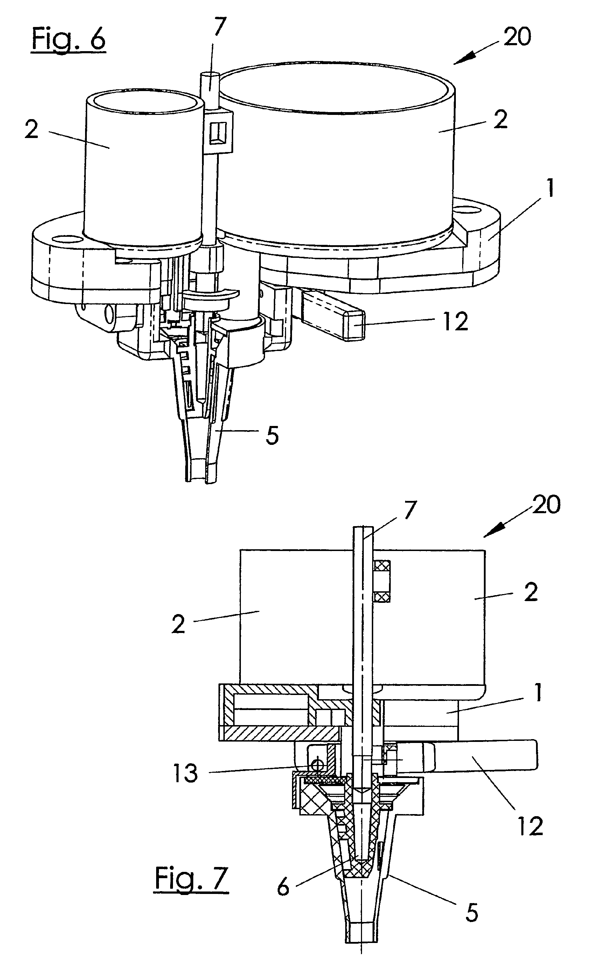

Nachdem die Mischdüse 5 in der in den Fig. 3 und 4 dargestellten Weise in die Vorrichtung eingeschoben ist, wird der Hebel 12 nach oben bewegt, so daß, wie dies in den Fig. 6 und 7 dargestellt ist, die Mischdüse 5 mit ihren Öffnungen 4 mit den Austrittsröhren 3 der Komponenten verbunden wird und dort zuverlässig festgehalten wird. Gleichzeitig kommt die Mischwalze 6 mit der Welle 7 in Verbindung und kann daher durch die Welle 7 angetrieben werden.

Soll die Mischdüse 5 entfernt werden, wird der Hebel 12 nach unten bewegt, und die Mischdüse 5 wird seitlich herausgezogen.

Das Einsetzen und Herausnehmen bereitet dabei wegen der Führung durch die Nuten 9 und Schienen 10 und aufgrund der Tatsache keine Probleme, daß der entsprechende Bereich der Vorrichtung gut einsehbar ist. Das seitliche Einschieben und Herausnehmen in Querrichtung wird auch nicht durch die Austrittsröhren 3 bzw. die Welle 7 behindert. Diese Teile kommen erst mit den entsprechenden Teilen der Mischdüse 5 in zuverlässigen Kontakt, wenn der Hebel 12 und damit auch die Mischdüse 5 nach oben in Richtung auf die Kartusche mit ihren Behältern 2 bewegt sind.

## Patentansprüche

1. Vorrichtung zum Ausgeben einer gemischten Mehrkomponentenmasse, insbesondere für zahnärztliche Zwecke, aus einer Kartusche (20) mit mehreren, die Komponenten enthaltenden Behältern (2), aus denen die Komponenten jeweils durch Verschieben eines darin angeordneten Kolbens in eine auf die Kartusche aufgesetzte Mischdüse (5) und aus dieser herausgedrückt werden, wobei die Vorrichtung eine Halterung (1, 31, 32) für die Kartusche (20) und eine Halterung (10) für die Mischdüse (5) aufweist,
**dadurch gekennzeichnet, dass** die Halterung (10) für die Mischdüse (5) zum Einsetzen und Herausnehmen der Mischdüse (5) quer zur Längsrichtung der Vorrichtung ausgebildet ist und so ausgebildet ist dass die Mischdüse (5) quer zur Längsachse der Vorrichtung in diese Halterung (10) einsetzbar und herausnehmbar ist
und dass die Halterung (10) für die Mischdüse (5) über eine axiale Parallelführung mit der Halterung (1, 31, 32) für die Kartusche (20) verbunden und in Längsrichtung der Vorrichtung in eine im wesentlichen dichte Verbindung mit den Behältern (2) und von dieser wieder weg bewegbar ist.

2. Vorrichtung nach ein Anspruch 1, **dadurch gekennzeichnet, dass** sie zum Halten einer Kartusche (20) mit zwei Behältern (2) ausgebildet ist.

3. Vorrichtung nach einem der Ansprüche, 1 oder 2, **dadurch gekennzeichnet, dass** sie einen mit einer als dynamischer Mischer ausgebildeten Mischdüse (5) verbindbaren Antrieb (7) aufweist.

4. Vorrichtung nach Anspruch 1, **dadurch gekennzeichnet, dass** sie einen Anschlag (11) zur Begrenzung der Querbewegung aufweist.

5. Vorrichtung nach Anspruch 1, **dadurch gekennzeichnet, dass** die Halterung (10) für die Mischdüse (5) mit Hilfe eines Hebels (12) verstellbar ist.

6. Vorrichtung nach einem der Ansprüche 1 bis 4, **dadurch gekennzeichnet, dass** die Halterung (10) für die Mischdüse (5) zwei Vorsprünge (10) aufweist, auf die der Fußteil (8) der Mischdüse (5) mit darin diametral angeordneten Nuten (9) aufschiebbar ist.

7. Vorrichtung nach Anspruch 6, **dadurch gekennzeichnet, dass** die beiden Vorsprünge (10) und entsprechend die beiden Nuten (9) unterschiedliche Dicken bzw. Breiten haben.

8. Vorrichtung nach einem der Ansprüche 1 bis 7, **dadurch gekennzeichnet, dass** sie eine Kartusche (20) und eine Mischdüse (5) aufweist.

9. Anordnung bestehend aus einer Kartusche (20) und einer Mischdüse (5) und einer Vorrichtung nach einem der Ansprüche 1 bis 8.

## Claims

1. Device for dispensing a mixed multi-component compound, in particular for dental purposes, from a cartridge (20) with several containers (2) which house the components and from which, in each case by displacement of a plunger arranged therein, the components are pressed out into a mixing nozzle (5), which is fitted onto the cartridge, and then out of said mixing nozzle (5), the device comprising a holder (1, 31, 32) for the cartridge (20) and a holder (10) for the mixing nozzle (5), **characterized in that** the holder (10) for the mixing nozzle (5) is designed for inserting and withdrawing the mixing nozzle (5) transversely with respect to the longitudinal direction of the device and is designed such that the mixing nozzle (5) can be inserted into and withdrawn from this holder (10) transversely with respect to the longitudinal axis of the device, and **in that** the holder (10) for the mixing nozzle (5) is connected via an axial parallel guide to the holder (1, 31, 32) for the cartridge (20) and, in the longitudinal direction of the device, can be moved into a substantially tight connection with the containers (2) and can be moved away again from this.

2. Device according to Claim 1, **characterized in that** it is designed to hold a cartridge (20) with two containers (2).

3. Device according to either of Claims 1 and 2, **characterized in that** it comprises a drive mechanism (7) which can be connected to a mixing nozzle (5) designed as a dynamic mixer.

4. Device according to Claim 1, **characterized in that** it comprises a stop (11) for limiting the transverse movement.

5. Device according to Claim 1, **characterized in that** the holder (10) for the mixing nozzle (5) is adjustable with the aid of a lever (12).

6. Device according to one of Claims 1 to 4, **characterized in that** the holder (10) for the mixing nozzle (5) has two projections (10) onto which it is possible to push the foot part (8) of the mixing nozzle (5), having grooves (9) arranged diametrically therein.

7. Device according to Claim 6, **characterized in that** the two projections (10) and, accordingly, the two grooves (9) have different thicknesses and widths, respectively.

8. Device according to one of Claims 1 to 7, **characterized in that** it comprises a cartridge (20) and a mixing nozzle (5).

9. Arrangement consisting of a cartridge (20) and of a mixing nozzle (5) and a device according to one of Claims 1 to 8.

## Revendications

1. Dispositif de distribution d'un amalgame de plusieurs composants, notamment pour usage dentaire, depuis une cartouche (20) comprenant plusieurs réservoirs (2), contenant les composants, à partir desquels les composants sont exprimés, par déplacement d'un piston disposé à l'intérieur, vers une buse de mélange (5) montée sur la cartouche et de là expulsés vers l'extérieur, le dispositif présentant un support (1, 31, 32) pour la cartouche (20) et un support (10) pour la buse de mélange (5),
**caractérisé en ce que** le support (10) pour la buse de mélange (5), afin de monter et démonter la buse de mélange (5), est monté transversalement à la direction longitudinale du dispositif et configuré de façon que la buse de mélange (5) puisse être montée et démontée dans ce support (10) transversalement à l'axe longitudinal du dispositif et **en ce que** le support (10) pour la buse de mélange (5) peut être déplacé, au moyen d'un guidage parallèle axial, conjointement avec le support (1, 31, 32) pour la cartouche (20) et, en direction longitudinale du dispositif, dans une liaison essentiellement étanche avec le réservoir (2) et à nouveau éloigné de celle-ci.

2. Dispositif selon la revendication 1, **caractérisé en ce qu'**il est configuré avec deux réservoirs (2) pour supporter une cartouche (20).

3. Dispositif selon la revendication 1 ou 2, **caractérisé en ce qu'**il présente un moteur (7) connectable à une buse de mélange (5) configurée en tant que mélangeur dynamique.

4. Dispositif selon la revendication 1, **caractérisé en ce qu'**il présente une butée (11) pour limiter le mouvement transversal.

5. Dispositif selon la revendication 1, **caractérisé en ce que** le support (10) pour la buse de mélange (5) peut être réglé au moyen d'un levier.

6. Dispositif selon l'une des revendications 1 à 4, **caractérisé en ce que** le support (10) pour la buse de mélange (5) présente deux saillies (10) sur lesquelles le pied (8) de la buse de mélange (5) peut être enfilé au moyen de deux rainure (9) diamétralement opposées.

7. Dispositif selon la revendication 6, **caractérisé en ce que** les deux saillies (10) et de ce fait les deux rainures (9) ont différentes épaisseurs ou largeurs.

8. Dispositif selon l'une des revendications 1 à 7, **caractérisé en ce qu'**il présente une cartouche (20) et une buse de mélange (5).

9. installation constituée d'une cartouche (20) et d'une buse de mélange (5) ainsi que d'un dispositif selon l'une des revendications 1 à 8
